# DEMANDE DE BREVET EUROPEEN

(11) **EP 1 120 292 A1**
(43) Date de publication de la demande: **01.08.2001**
(21) Numéro de dépôt: 00403604.2
(22) Date de dépôt: 20.12.2000
(51) Int. Cl.: B60B 33/00

(54) **Chariot comprenant un châssis supportant des roues par l'intermédiaire d'un dispositif de montage simple et fiable**

(30) Priorité: 25.01.2000 FR 0000918
(71) Demandeur: ATELIERS REUNIS CADDIE, F-67300 Schiltigheim (FR)
(72) Inventeur: Joseph, Alice, 67301 Schiltigheim Cedex (FR); Le Marchand, Alain, 67116 Reichstett (FR)
(74) Mandataire: CABINET BONNET-THIRION

(57) **Abrégé**

Chariot comprenant un châssis (2) supportant des roues (9,10), le châssis (2) étant du type tubulaire, l'une (10) au moins desdites roues étant montée à rotation autour d'un axe (11) porté par une chape (12), laquelle chape (12) est solidaire d'une patte de fixation (13) munie d'une queue (14) : la queue (14) de la patte de fixation (13) est conformée en sorte de pouvoir être introduite dans une extrémité verticale (8) du châssis (2).

## Description

L'invention concerne le montage d'une roue sur un châssis en tube, notamment le châssis d'un chariot, du genre de ceux mis à disposition de la clientèle dans les grandes surfaces.

Un tel chariot comporte généralement un châssis constitué, d'une part, de deux montants latéraux dont la partie supérieure supporte une poignée de préhension et une corbeille et, d'autre part, un socle supportant les montants latéraux et des roues.

La présente invention a pour but de proposer un dispositif de montage de roue, du genre de celui décrit dans le document EP-A-0 911 184, sur un tel châssis en tube, qui soit simple, peu onéreux et très fiable.

Selon l'invention, un chariot comprenant un châssis supportant des roues, le châssis étant du type tubulaire, l'une au moins desdites roues étant montée à rotation autour d'un axe porté par une chape, laquelle chape est solidaire d'une patte de fixation munie d'une queue, est caractérisé par le fait que la queue de la patte de fixation est conformée en sorte de pouvoir être introduite dans une extrémité verticale du châssis.

Avantageusement, la chape est montée pivotante autour de la patte de fixation, le fond de la chape coopérant intérieurement et extérieurement avec des couronnes à billes maintenues par des coupelles retournées assemblées par sertissage en bout d'un téton d'extrémité de la patte de fixation, entre un épaulement que celle-ci présente et une rondelle rapportée.

De préférence, la queue prolonge un sabot dont au moins une dimension transversale est supérieure à au moins l'une des dimensions transversales de l'extrémité verticale du châssis dans laquelle la queue est destinée à être introduite.

Avantageusement, la queue de la patte de fixation et l'extrémité verticale du châssis ont des sections complémentaires ; lesdites sections ne sont pas circulaires ; lesdites sections sont de forme oblongue.

Avantageusement, le châssis du chariot est constitué, d'une part, de deux montants latéraux dont la partie supérieure supporte une poignée de préhension et une corbeille et, d'autre part, un socle dont la partie arrière s'étend verticalement et reçoit la queue de la patte de fixation.

De préférence, l'extrémité verticale est celle d'une jambe de force reliant la partie arrière du socle à chaque montant latéral.

Avantageusement, la queue est munie d'un trou transversal placé au droit de trous ménagés dans l'extrémité verticale, lesdits trous recevant la tige filetée d'un boulon ; une empreinte de la tête du boulon est prévue dans la paroi de l'extrémité verticale.

Pour mieux faire comprendre l'objet de l'invention, on va en décrire maintenant, à titre d'exemple, purement illustratif et non limitatif, un mode de réalisation représenté sur les dessins annexés.

Sur ces dessins :
- la figure 1 est une vue partielle en élévation d'une roue munie d'un dispositif de montage selon l'invention et montée sur un chariot ;
- la figure 2 est une vue, partiellement en coupe, de gauche par rapport à la figure 1 ;
- la figure 3 est une section selon III-III de la figure 1, à plus grande échelle ;
- la figure 4 est une vue à échelle réduite du chariot sur lequel est montée la roue selon les figures 1 à 3.

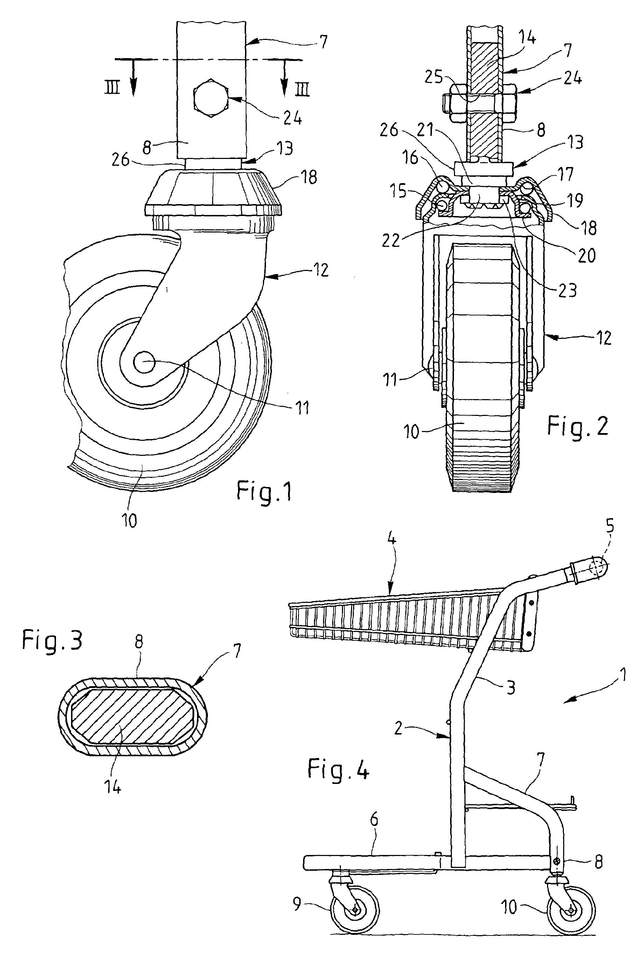

En se reportant à la figure 4, on voit qu'un chariot 1 comprend classiquement un châssis 2 constitué, d'une part, de deux montants latéraux 3 dont la partie supérieure supporte une poignée de préhension 5 et une corbeille 4 et, d'autre part, un socle 6 supportant les montants latéraux 2 et des roues avant 9 et arrière 10.

Ici, des jambes de force 7 relient chaque montant latéral 3 à la partie arrière du socle 6 au droit de laquelle l'extrémité 8 de la jambe de force 7 s'étend verticalement, en étant raccordée latéralement au socle 6.

Dans la forme représentée, le châssis 2 est du type tubulaire : ainsi, ici tant les montants latéraux 3 et le socle 6 que les jambes de force 7 sont réalisés à partir de tubes convenablement pliés et cintrés, assemblés par soudage ; dès lors, l'extrémité verticale 8 de chaque jambe de force 7 est creuse et ouverte vers le bas ; cette disposition est mise à profit pour réaliser de façon simple le montage des roues arrière 10, comme cela va maintenant être expliqué en référence aux figures 1 à 3.

Sur ces figures, une roue arrière 10 est montée à rotation autour d'un axe 11 porté par les ailes d'une chape 12 montée pivotante autour d'une patte de fixation 13 portée par l'extrémité verticale 8 de la jambe de force 7. Pour ce faire, le fond de la chape 12 coopère intérieurement et extérieurement avec des couronnes à billes, une couronne inférieure 15 et une couronne supérieure 16 disposées verticalement entre, d'une part, le fond de la chape 12 et, d'autre part, une rainure annulaire 17 d'une coupelle retournée 18 et un rebord transversal 20 d'une autre coupelle 19 également retournée, les deux coupelles retournées 18, 19 étant assemblées par sertissage en bout d'un téton 22 d'extrémité de la patte de fixation 13, entre un épaulement 21 que celle-ci présente et une rondelle rapportée 23 ; une ouverture centrale ménagée dans le fond de la chape 12 permet à celle-ci de pivoter autour de la zone d'assemblage des coupelles retournées 18, 19 tout en étant maintenue axialement entre les couronnes à billes 15, 16. Du côté opposé au téton 22, la patte de fixation 13 porte, au delà de l'épaulement 21, un sabot 26 dont au moins une dimension transversale est supérieure à au moins l'une des dimensions transversales de l'extrémité verticale 8 de la jambe de force 7, ledit sabot 26 étant prolongé selon une queue 14 adaptée à être introduite dans l'extrémité verticale 8 de la jambe de force 7 ; lorsque la queue 14 est introduite dans l'extrémité verticale 8 de la jambe de force 7, celle-ci repose sur le sabot 26 ; cette introduction peut être réalisée à force ; en variante, et tel que représenté, l'introduction est faite avec un léger jeu de montage en sorte que la roue 10 puisse être montée et démontée facilement ; dans ce cas, pour le maintien de la roue 10 par rapport au châssis 2, la queue 14 est munie d'un trou transversal 25 que l'on place au droit de trous ménagés dans l'extrémité verticale 8, lesdits trous recevant la tige filetée d'un boulon 24 ; une empreinte peut être prévue dans la paroi de l'extrémité verticale 8 pour le maintien de la tête du boulon 24 lors du serrage ou desserrage de son écrou.

Le maintien de la patte de fixation 13 est d'autant mieux assuré que l'extrémité 8 de la jambe de force 7 et la queue 14 de la patte de fixation 13 ont des sections voisines et complémentaires ; ce maintien selon toutes les directions transversales est obtenu aisément lorsque ces sections ne sont pas circulaires ; ici, elles sont de forme oblongue, les tubes du châssis 2 étant du genre à méplats.

Par ailleurs, le transfert des efforts et des chocs des roues vers le châssis est bien assuré.

Comme on le voit, le montage de roue selon l'invention est simple ; il ne nécessite ni insert, ni pièce intermédiaire, rapportés ou soudés.

## Revendications

1. Chariot comprenant un châssis (2) supportant des roues (9,10), le châssis (2) étant du type tubulaire, l'une (10) au moins desdites roues étant montée à rotation autour d'un axe (11) porté par une chape (12), laquelle chape (12) est solidaire d'une patte de fixation (13) munie d'une queue (14), caractérisé par le fait que la queue (14) de la patte de fixation (13) est conformée en sorte de pouvoir être introduite dans une extrémité verticale (8) du châssis (2).

2. Chariot selon la revendication 1, caractérisé par le fait que la chape (12) est montée pivotante autour de la patte de fixation (13), le fond de la chape (12) coopérant intérieurement et extérieurement avec des couronnes à billes (15,16) maintenues par des coupelles retournées (18,19) assemblées par sertissage en bout d'un téton d'extrémité (22) de la patte de fixation (13), entre un épaulement (21) que celle-ci présente et une rondelle rapportée (23).

3. Chariot selon l'une des revendications 1 ou 2, caractérisé par le fait que la queue (14) prolonge un sabot (26) dont au moins une dimension transversale est supérieure à au moins l'une des dimensions transversales de l'extrémité verticale (8) du châssis (2) dans laquelle la queue (14) est destinée à être introduite.

4. Chariot selon l'une des revendications 1 à 3, caractérisé par le fait que la queue (14) de la patte de fixation (13) et l'extrémité verticale (8) du châssis (2) ont des sections complémentaires.

5. Chariot selon la revendication 4, caractérisé par le fait que lesdites sections sont de forme oblongue.

6. Chariot selon l'une des revendications 1 à 5, caractérisé par le fait que le châssis (2) est constitué, d'une part, de deux montants latéraux (3) dont la partie supérieure supporte une poignée de préhension (5) et une corbeille (4) et, d'autre part, un socle (6) dont la partie arrière s'étend verticalement et reçoit la queue (14) de la patte de fixation.

7. Chariot selon la revendication 6, caractérisé par le fait que l'extrémité verticale (8) est celle d'une jambe de force (7) reliant la partie arrière du socle (6) à chaque montant latéral (3).

8. Chariot selon l'une des revendication 1 à 7, caractérisé par le fait que la queue (14) est munie d'un trou transversal (25) placé au droit de trous ménagés dans l'extrémité verticale (8), lesdits trous recevant la tige filetée d'un boulon (24).

9. Chariot selon la revendication 8, caractérisé par le fait qu'une empreinte de la tête du boulon (24) est prévue dans la paroi de l'extrémité verticale (8).
